# EUROPÄISCHE PATENTSCHRIFT

(11) **EP 1 591 693 B1**
(45) Veröffentlichungstag und Bekanntmachung des Hinweises auf die Patenterteilung: **19.09.2007**
(21) Anmeldenummer: 05008954.9
(22) Anmeldetag: 23.04.2005
(51) Int. Cl.: F16G 13/18, F16G 13/20

(54) **Verfahren und Vorrichtung zum Speichern einer Schubkette**
Method and device for the storage of a thrust chain
Procédé et dispositif pour le stockage d'une chaîne de poussée

(30) Priorität: 26.04.2004 DE 202004006624 U
(43) Veröffentlichungstag der Anmeldung: 02.11.2005
(73) Patentinhaber: Motus Engineering GmbH & Co. KG, 35041 Marburg (DE)
(72) Erfinder: Wagner, Alexander, D-35102 Lohra (DE); Battenberg, Ralf, D-35112 Fronhausen (DE)
(74) Vertreter: WALTHER, WALTHER & HINZ Patentanwälte - European Patent Attorneys

(56) Entgegenhaltungen:
- EP-A- 0 403 576
- EP-A- 0 799 788
- DE-C2- 4 424 287
- DE-U1-4202004 006 62
- US-A- 2 946 556

## Beschreibung

Die vorliegende Erfindung betrifft eine Vorrichtung gemäß dem Oberbegriff des Anspruches 3 und ein Verfahren gemäß dem Oberbegriff des Anspruches 1.

Bei Anlagen zum Transport von Personen oder Gegenständen werden häufig Schubketten eingesetzt, um die eigentliche Transportplattform exakt und zuverlässig von A nach B zu bewegen. Dies könne beispielsweise Hubgeräte für Personen oder Lasten sein oder auch Beschickungsmaschinen zum Ein- oder Ausbringen von Objekten in Behandlungsanlagen, wie z. B. Gefriertrocknungsanlagen oder Beschichtungsöfen. Dabei ist es beispielsweise aus der DE 44 24 287 C2 oder der EP 0 403 576 B1 bekannt, die Schubketten vor, hinter oder unter dem eigentlichen Antriebsrad zu speichern. Weil eine solche Schubkette in der Regel nur in eine Richtung umgelenkt werden kann, erfolgt die Speicherung häufig in Form einer halben Schlaufe unter dem Antriebsrad, wie dies insbesondere Fig. 7 des DE 44 24 287 C2 entnommen werden kann. Allerdings benötigt man für eine derartige Speicherung der Schubkette sehr viel Platz, so dass die gesamte Anlage infolgedessen sehr groß wird.

Aus der US 2,946,556 ist eine Druck-Zugbewegungsvorrichtung bekannt, bei der ein kettenähnliches Zug-Druckband eine Anzahl von klavierbandähnlichen Gelenken aufweist, und wobei dieses Druck- Zugband durch eine trommelähnliche Wickelvorrichtung aufgewickelt werde kann, Dabei ist das Druck-Zugband gegenüber der Längsachse der Wickelvorrichtung schräg angeordnet, damit das Druck-Zugband in verschiedenen, nebeneinander gelegenen Wicklungen auf der Wickelvorrichtung aufgebracht werden kann. Durch die schräge Anordnung des Druck Zugbandes wird ein erhöhter Platzbedarf der ganzen Vorrichtung erforderlich, und die Kraftübertragung ist schwierig, da der genannte Winkel ein schräges Einleiten der Kräfte bewirkt.

Davon ausgehend liegt der vorliegenden Erfindung die Aufgabe zu Grunde, ein Verfahren und eine Vorrichtung zum Speichern einer Schubkette zu schaffen, so dass die Schubkette platzsparend untergebracht werden kann.

Als technische Lösung dieser Aufgabe wird erfindungsgemäß ein Verfahren gemäß den Merkmalen des Anspruches 1 und eine Vorrichtung gemäß den Merkmalen des Anspruches 3 vorgeschlagen. Vorteilhafte Weiterbildungen dieser Vorrichtung und dieses Verfahrens sind den jeweiligen Unteransprüchen zu entnehmen.

Ein nach dieser technischen Lehre ausgebildetes Verfahren und eine nach dieser technischen Lehre ausgeführte Vorrichtung haben den Vorteil, dass die Schubkette durch das Aufwickeln auf eine Wickelvorrichtung in dem Bereich neben dem eigentlichen Antriebsrad gespeichert werden kann. In der Regel ist bei den hier in Rede stehenden Transportanlagen neben dem Antriebsrad ohnehin Platz, da die einzelnen Transportplattformen eine entsprechende Breite aufweisen. Durch das Aufwickeln der Schubkette wird also der Platz vor, hinter oder unter dem eigentlichen Antriebsrad frei, so dass die Transportanlage entsprechend kleiner gebaut werden kann, was zu einer erheblichen Platzeinsparung führt. Beispielsweise bei Beschickungsvorrichtungen für eine Gefriertrocknungsanlage kann hierdurch sehr viel Platz eingespart werden, so dass der gesamte Raumbedarf für die Beschickungsvorrichtung einschließlich Gefriertrocknungsanlage sehr viel weniger Hallenfläche zur Verfügung gestellt werden braucht.

Dabei hat es sich als vorteilhaft erwiesen, die Schubkette quer zur Bewegungsrichtung verschiebbar zu gestalten. Hierdurch ist es möglich, benachbarte Kettenglieder derart zu versetzen, dass einzelne Kettenglieder nach Durchführung einer ganzen Wicklung auf der Wickelvorrichtung um etwas mehr als die Breite der Schubkette versetzt sind, so dass die Schubkette in mehreren Wicklungen auf der Wickelvorrichtung aufgebracht werden kann.

In einer bevorzugten Ausführungsform werden die Glieder der Schubkette mittels einer Zwangsführung kontinuierlich versetzt. Dabei werden die Glieder während des Aufwickelns der Schubkette auf der Wickelvorrichtung aus ihrer fluchtenden Position herausgeführt und um 1 mm bis 5 mm, vorzugsweise 3 mm versetzt, so dass einzelne Kettenglieder nach einer Wicklung um die Breite der Schubkette versetzt sind. Beim Abwickeln der Schubkette von der Wickelvorrichtung werden die einzelnen Glieder durch die Zwangsführung in die entgegengesetzte Richtung versetzt, so dass vorzugsweise um 3 mm versetzte Glieder wieder in eine Flucht gebracht werden, sobald sie die Vorrichtung zum Speichern einer Schubkette verlassen. Hierdurch wird sichergestellt, dass die Schubkette während des Eingriffs mit der Transportplattform eine gerade Linie bildet und dass die Schubkette im aufgewickelten Zustand einen schrägen Verlauf aufweist, um mehrere Wicklungen auf eine Wickelvorrichtung zu erreichen.

In einer bevorzugten Ausführungsform ist die Wickeltrommel als hohlzylindrische Trommel ausgeführt, auf deren Oberfläche die Schubkette zur Anlage kommt. Dies hat den Vorteil, dass eine große Oberfläche zur Anlage der Schubkette zur Verfügung steht. Ein weiterer Vorteil besteht darin, dass die Schubkette auf der zylindrischen Oberfläche der Trommel gleichmäßig abgelegt werden kann, so dass ein Verkanten vermieden wird.

In einer anderen, bevorzugten Ausführungsform ist die Trommel quer zur Bewegungsrichtung der Schubkette verschiebbar gelagert. Dies hat den Vorteil, dass die Trommel beim Auf- und/oder Abwickeln der Schubkette derart nachgeführt werden kann, dass die Trommel mit ihrer freien Fläche stets an der gerade durchzuführenden Wicklung zur Verfügung steht, so dass ein optimales Aufwickeln der Schubkette möglich wird. Dabei hat es sich als vorteilhaft erwiesen, die Trommel auf einer Bewegungsspindel zu führen, um eine präzise und verschleißarme Bewegung der Trommel zu erreichen.

In noch einer anderen, bevorzugten Ausführungsform sind auf der Oberfläche der Trommel Aussparungen vorgesehen. Diese Aussparungen dienen vornehmlich zur Reinigung der gesamten Vorrichtung, insbesondere um die in der Nahrungsmittel- und/oder Pharmaindustrie erforderlichen Hygienestandards einhalten zu können.

In einer weiteren, bevorzugten Ausführungsform sind die Glieder der Schubkette nur einseitig gegeneinander verschiebbar. Dies hat den Vorteil, dass die einzelnen Glieder der Schubkette nicht versehentlich in die falsche Richtung verschoben werden, was zu einem unkorrekten Aufwickeln führt. Dabei hat es sich als vorteilhaft erwiesen, benachbarte Glieder mit einem Bolzen beweglich miteinander zu verbinden, wobei der Bolzen durch einen an einem ersten Glied angebrachten Zapfen und durch einen linken und einen rechten Steg am zweiten Glied geführt ist. Dabei ist der linke Steg dicker ausgebildet als der rechte Steg, so dass nur eine Verschiebung in eine Richtung möglich ist.

In noch einer anderen, bevorzugten Ausführungsform ist an jedem Glied der Schubkette ein nach außen abstehender Mitnehmer angebracht, der vorzugsweise aus Kunststoff (PE oder PVDF) gebildet ist. Dieser Mitnehmer greift in entsprechend korrespondierende Gegenstücke an der Transportplattform ein, um diese voranzutreiben. Gleichzeitig greift dieser Mitnehmer in eine Zwangsführung ein, mittels der benachbarte Glieder der Schubkette quer zur Bewegungsrichtung versetzt werden. Dabei hat es sich als vorteilhaft erwiesen, den Mitnehmer aus PE oder aus PVDF zu fertigen, um in der ebenfalls aus PE oder PVDF gefertigten Zwangsführung möglichst wenig Reibung zu erzeugen.

Weitere Vorteile des erfindungsgemäßen Verfahrens und der erfindungsgemäßen Vorrichtung ergeben sich aus der beigefügten Zeichnung und den nachstehend beschriebenen Ausführungsformen. Die erwähnten Ausführungsformen sind nicht als abschließende Aufzählung zu verstehen, sondern haben vielmehr beispielhaften Charakter. Es zeigen:

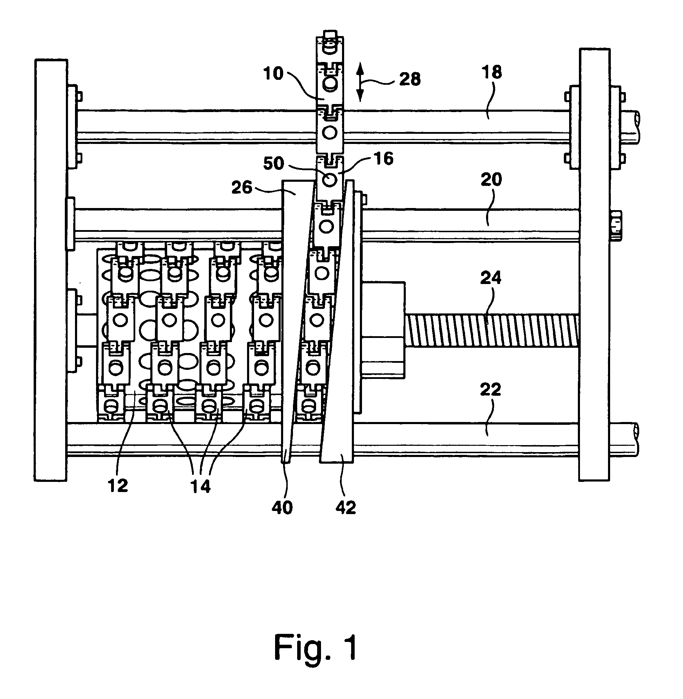

- Fig. 1: eine Ansicht der erfindungsgemäßen Vorrichtung mit nahezu vollständig aufgewickelter Schubkette;
- Fig. 2: eine Ansicht der Vorrichtung gemäß Fig. 1 mit teilweise aufgewickelter Schubkette;
- Fig. 3: zwei Glieder der Schubkette der Vorrichtung gemäß Fig. 1 in versetzter Position;
- Fig. 4: zwei Glieder der Schubkette der Vorrichtung gemäß Fig. 1 in geradliniger Position;
- Fig. 5: eine perspektivische Ansicht einer Zwangsführung der Vorrichtung gemäß Fig. 1.

In den Anlagen zum Transport von Personen oder Gütern von A nach B werden häufig Schubketten 10 als Antrieb für die (hier nicht näher dargestellte) Transportplattform eingesetzt. Dabei wird die Schubkette 10 in einer Vorrichtung zum Speichern der Schubkette 10 gespeichert. Diese Vorrichtung umfasst eine Trommel 12, auf der die Schubkette 10 in mehreren Wicklungen 14 aufgewickelt ist. Die aus einer Vielzahl von Gliedern 16 zusammengesetzte Schubkette 10 ist mit ihrem letzten Glied fest an der Trommel 12 fixiert, so dass ein Verrutschen der Schubkette 10 auf der Trommel 12 vermieden wird.

Des weiteren umfasst die Vorrichtung zum Speichern der Schubkette 10 ein hier nicht näher dargestelltes Antriebsrad, welches auf einer Welle 18 drehbar gelagert ist, sowie zwei Haltestangen 20, 22, eine Bewegungsspindel 24 und eine hier zweiteilig ausgeführte Zwangsführung 26.

Die Trommel 12 ist auf der Bewegungsspindel 24 derart gelagert, dass sich die Trommel 12 quer zur Bewegungsrichtung der Schubkette 10 gemäß Pfeil 28 bewegen lässt. Darüber hinaus weist die Trommel 12 eine Anzahl von Aussparungen 30 auf, gemäß der die Trommel 12 leicht zu reinigen ist.

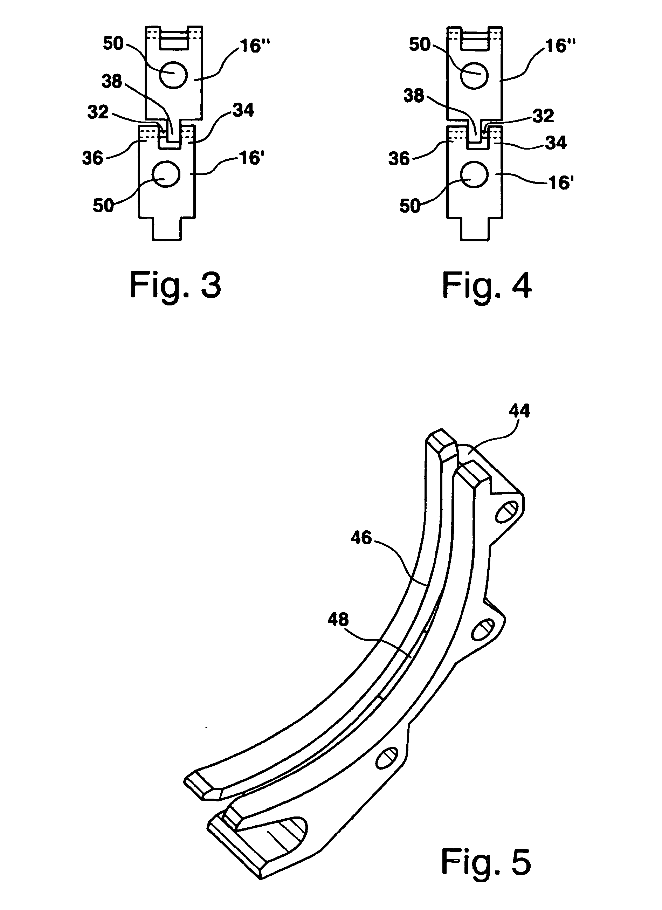

In Figuren 3 und 4 sind zwei benachbarte Glieder 16' und 16" dargestellt. Dabei sind diese benachbarten Glieder 16' und 16" über einen Bolzen 32 gelenkartig miteinander verbunden. Im ersten Glied 16' sind ein rechter Steg 34 und ein linker Steg 36 ausgebildet, in denen der Bolzen 32 gehalten ist, während im zweiten Glied 16" ein mittig angeordneter Zapfen 38 angeformt ist, durch den der Bolzen 32 hindurchgreift. Dabei ist der linke Steg 36 sehr viel breiter ausgebildet, als der rechte Steg 34, so dass der Zapfen 38 genau am linken Steg 36 anliegt, sofern die benachbarten Glieder 16' und 16" miteinander fluchtend angeordnet sind, wie dies in Fig. 4 dargestellt ist. Dagegen liegt der Zapfen 38 am schmaleren, rechten Steg 34 an, sofern die benachbarten Glieder 16', 16" versetzt zueinander angeordnet sind, wie dies in Fig. 3 dargestellt ist.

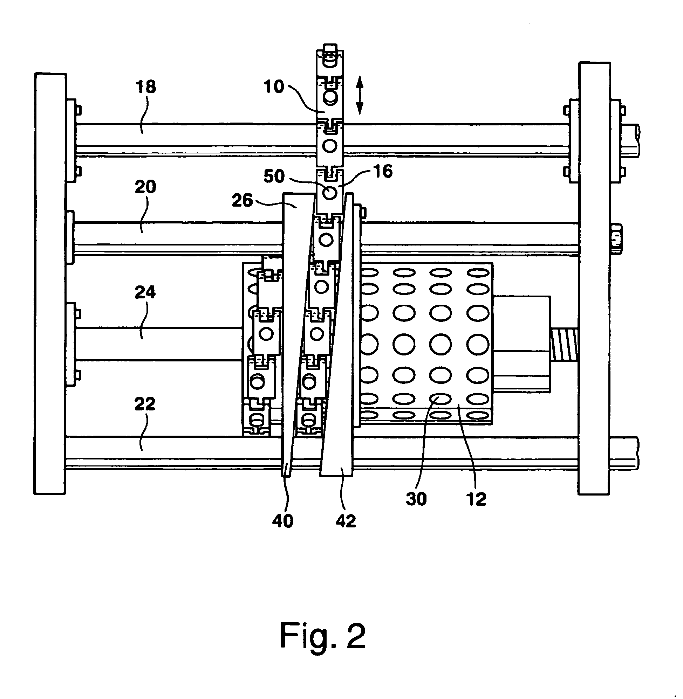

Betrachtet man nun Fig. 2 und stellt man sich vor, dass die Schubkette 10 hier gerade auf die Trommel 12 aufgewickelt wird, so wird deutlich, dass die einzelnen Glieder 16 der Schubkette 10 an einer ersten Führungskante 40 anliegend gegenüber ihrem jeweiligen benachbarten Glied 16 versetzt werden. Die Glieder 16 werden so weit gegeneinander versetzt, dass bei einer vollständigen Wicklung ein Versatz von etwas mehr als der Breite der Schubkette 10 erfolgt, so dass mehrere Wicklungen 14 nebeneinander auf der Trommel 12 angebracht werden können. Beim Abwickeln der Schubkette 10 von der Trommel 12 werden die Glieder 16, analog zum Aufwikkeln, entlang einer zweiten Führungskante 42 geführt und derart versetzt, dass sie beim Verlassen der Zwangsführung 26 wieder in einer Linie fluchtend angeordnet sind. Dabei hat es sich als vorteilhaft erwiesen, die Zwangsführung 26, insbesondere die Führungskanten 40, 42 aus PE herzustellen, um den Reibungswiderstand gering zu halten.

In Fig. 5 ist eine alternative Zwangsführung 44 dargestellt, die ebenfalls eine erste und eine zweite Führungskante 46, 48 aufweist und die ebenfalls derart schräg angeordnet ist, dass die einzelnen Glieder 16 der Schubkette 10 während eines Durchlaufes durch die Zwangsführung 44 um genau eine Breite der Schubkette 10 versetzt werden. Da auf einer Wicklung 14 der Trommel 12 eine Anzahl von Gliedern 16 angebracht sind, ist es bei benachbarten Gliedern 16', 16" mit einer Breite von etwa 30 mm ausreichend, wenn hier ein Versatz zwischen 1 mm und 5 mm, vorzugsweise 3 mm, erfolgt. Dabei ist die Zwangsführung 44 so ausgelegt, dass der Abstand zwischen der ersten Führungskante 46 und der zweiten Führungskante 48 so gewählt ist, dass darin ein am Glied 16 angebrachter Mitnehmer 50 passgenau geführt werden kann. Es hat sich als vorteilhaft erwiesen, sowohl den Mitnehmer 50, als auch die Zwangsführung 26, 44 aus PE herzustellen, um eine möglichst geringe Reibung an dieser Stelle zu erreichen.

Es versteht sich, dass die exakte Dimensionierung der einzelnen Bauteile aufeinander abgestimmt wird. So wird beispielsweise der Versatz zwischen benachbarten Gliedern 16 und damit einhergehend die Zwangsführung 26, 44 so ausgelegt, dass auf einer Wicklung 14 ein gesamter Versatz von etwas mehr als eine Breite der Schubkette erfolgt. Auch wird die Steigung der Bewegungsspindel 24 so gewählt, dass ein korrektes Auf- und Abwickeln der Schubkette 10 von der Trommel 12 erreicht wird.

In einer anderen, hier nicht dargestellten Ausführungsform sind in einer Beschickungsanlage zwei Vorrichtungen zum Speichern einer Schubkette der oben beschriebenen Art vorgesehen, wobei beide Trommeln auf derselben Bewegungsspindel geführt werden.

### Bezugszeichenliste:

- 10: Schubkette
- 12: Trommel
- 14: Wicklung
- 16: Glied
- 18: Welle
- 20: Haltestange
- 22: Haltestange
- 24: Bewegungsspindel
- 26: Zwangsführung
- 28: Pfeil
- 30: Aussparung
- 32: Bolzen
- 34: rechter Steg
- 36: linker Steg
- 38: Zapfen
- 40: Führungskante
- 42: Führungskante
- 44: Zwangsführung
- 46: Führungskante
- 48: Führungskante
- 50: Mitnehmer

## Patentansprüche

1. Verfahren zum Speichern einer Schubkette, insbesondere einer selbstversteifenden Schubkette, wobei die Schubkette (10) in mehreren nebeneinander liegenden Wicklungen (14) auf eine um seine Längsachse rotierbar gelagerte Wickelvorrichtung (12) aufgewickelt wird,
**dadurch gekennzeichnet,**
**dass** beim Auf- und/oder Abwickeln der Schubkette (10) benachbarte Glieder (16) der Schubkette (10) quer zur Bewegungsrichtung (28) gegeneinander versetzt werden.

2. Verfahren nach Anspruch 1,
**dadurch gekennzeichnet**
**dass** die Glieder (16) in einer Zwangsführung (26, 44) kontinuierlich versetzt werden.

3. Vorrichtung mit einer Schubkette, insbesondere einer selbstversteifenden Schubkette, und mit einer um seine Längsachse rotierbar gelagerten Wickelvorrichtung (12) zum Aufwickeln der Schubkette (10) in mehreren, nebeneinander angeordneten Wicklungen,
**dadurch gekennzeichnet,**
**dass** benachbarte Glieder (16) der Schubkette (10) quer zur Bewegungsrichtung (28) gegeneinander verschiebbar miteinander verbunden sind.

4. Vorrichtung nach Anspruch 3,
**dadurch gekennzeichnet,**
**dass** die Wickelvorrichtung als hohlzylindrische Trommel (12) ausgeführt ist, auf deren Oberfläche die Schubkette (10) zur Anlage kommt.

5. Vorrichtung nach wenigstens einem der Ansprüche 3 oder 4,
**dadurch gekennzeichnet,**
**dass** die Trommel (12) quer zur Bewegungsrichtung (28) der Schubkette (10) verschiebbar gelagert ist.

6. Vorrichtung nach wenigstens einem der Ansprüche 3 bis 5,
**dadurch gekennzeichnet,**
**dass** die Trommel (12) auf einer Bewegungsspindel (24) geführt ist.

7. Vorrichtung nach wenigstens einem der Ansprüche 3 bis 6,
**dadurch gekennzeichnet,**
**dass** in der Oberfläche der Trommel (12) Aussparungen (30) vorgesehen sind.

8. Vorrichtung nach einem der voranstehenden Ansprüche 3 bis 7,
**dadurch gekennzeichnet,**
**dass** die Glieder (16) nur einseitig verschiebbar sind.

9. Vorrichtung nach wenigstens einem der voranstehenden Ansprüche 3 bis 8,
**dadurch gekennzeichnet,**
**dass** benachbarte Glieder (16', 16") über einen Bolzen (32) beweglich miteinander verbunden sind, wobei der Bolzen (32) bei einem ersten Glied (16") in einem mittig angeordneten Zapfen (38) gehalten ist, während der Bolzen (32) im zweiten Glied (16') in einem rechten (34) und einem linken Steg (36) gehalten ist, wobei der linke Steg (36) sehr viel breiter ausgebildet ist, als der rechte Steg (34).

10. Vorrichtung nach wenigstens einem der Ansprüche 3 bis 9,
**dadurch gekennzeichnet,**
**dass** jedes Glied (16) einen nach außen abstehenden Mitnehmer (50) aufweist.

11. Vorrichtung nach wenigstens einem der voranstehenden Ansprüche 3 bis 10,
**gekennzeichnet durch**,
eine Zwangsführung (26, 44), die benachbarte Glieder (16) quer zur Bewegungsrichtung (28) versetzt.

12. Vorrichtung nach Anspruch 11,
**dadurch gekennzeichnet,**
**dass** die Glieder (16) mit ihrem Mitnehmer (50) in die Zwangsführung (26, 44) eingreifen und über diesen Mitnehmer (50) quer zur Bewegungsrichtung (28) der Schubkette (10) versetzt werden.

## Claims

1. A method for storing a push chain, more specifically a self-locking push chain, said push chain (10) being wound into a plurality of side-by-side turns (14) about a winding apparatus (12) that is carried so as to be rotatable about its longitudinal axis,
**characterized in**
**that** adjacent links (16) of the push chain (10) become offset relative to each other across the direction of movement (28) when the push chain (10) is wound and/or unwound.

2. The method as set forth in claim 1,
**characterized in**
**that** the links (16) become continuously offset in a restraint (26, 44).

3. A device with a push chain, for storing a push chain, more specifically a self-locking push chain, and with a winding apparatus (12) that is carried so as to be rotatable about its longitudinal axis for winding the push chain (10) into a plurality of turns disposed side by side,
**characterized in**
**that** adjacent links (16) of the push chain (10) are connected together so as to be slidable against each other across the direction of movement (28).

4. The device as set forth in claim 3,
**characterized in**
**that** the winding apparatus is configured to be a cylindrical hollow drum (12) on the surface of which the push chain (10) comes to rest.

5. The device as set forth in at least one of the claims 3 or 4,
**characterized in**
**that** the drum (12) is carried so as to be slidable across the direction of movement (28) of the push chain (10).

6. The device as set forth in at least one of the claims 3 through 5,
**characterized in**
**that** the drum (12) is guided on a screw drive (24).

7. The device as set forth in at least one of the claims 3 through 6,
**characterized in**
**that** recesses (30) are provided in the surface of the drum (12).

8. The device as set forth in at least one of the afore mentioned claims 3 through 7,
**characterized in**
**that** the links (16) are slidable on one side only.

9. The device as set forth in at least one of the afore mentioned claims 3 through 8,
**characterized in**
**that** adjacent links (16', 16") are movably connected together by means of a bolt (32), said bolt (32) being retained at a first link (16") in a centrally disposed pin (38) whilst said bolt (32) is retained in the second link (16') in a right (34) and a left ridge (36) with the left ridge (36) being configured to be much thicker than the right ridge (34).

10. The device as set forth in at least one of the afore mentioned claims 3 through 9,
**characterized in**
**that** each link (16) comprises an outwardly protruding driver member (50).

11. The device as set forth in at least one of the afore mentioned claims 3 through 10,
**characterized by**
a restraint (26, 44) that causes the adjacent links (16) to become offset across the direction of movement (28).

12. The device as set forth in claim 11,
**characterized in**
**that** the links (16) engage the restraint (26, 44) by their driver member (50) and are caused to become offset across the direction of movement (28) of the push chain (10) by said driver member (50).

## Revendications

1. Procédé de stockage d'une chaîne rigide en poussée, notamment d'une chaîne qui se verrouille en poussée, cette chaîne rigide en poussée (10) étant enroulée en plusieurs enroulements (14) disposés côte à côte sur un dispositif enrouleur (12) monté mobile en rotation autour de son axe longitudinal,
**caractérisé en ce**
**que**, lors de l'enroulement et/ou du déroulement de la chaîne rigide en poussée (10), des maillons (16) voisins de la chaîne rigide en poussée (10) sont décalés l'un par rapport à l'autre en travers du sens de mouvement (28).

2. Procédé selon la revendication 1,
**caractérisé en ce**
**que** les maillons (16) sont décalés en continu dans un guidage forcé (26, 44).

3. Dispositif avec une chaîne rigide en poussée, notamment avec une chaîne qui se verrouille en poussée, et avec un dispositif enrouleur (12) monté mobile en rotation autour de son axe longitudinal et destiné à enrouler la chaîne rigide en poussée (10) en plusieurs enroulements disposés côte à côte,
**caractérisé en ce**
**que** des maillons (16) voisins de la chaîne rigide en poussée (10) sont reliés ensemble de manière à être mobiles en translation les uns par rapport aux autres en travers du sens de mouvement (28).

4. Dispositif selon la revendication 3,
**caractérisé en ce**
**que** le dispositif enrouleur est réalisé sous forme de tambour (12) cylindrique creux contre la surface duquel la chaîne rigide en poussée (10) vient en appui.

5. Dispositif selon une au moins des revendications 3 ou 4,
**caractérisé en ce**
**que** le tambour (12) est monté mobile en translation en travers du sens de mouvement (28) de la chaîne rigide en poussée (10).

6. Dispositif selon une au moins des revendications 3 à 5,
**caractérisé en ce**
**que** le tambour (12) est guidé sur un arbre de transmission fileté (24).

7. Dispositif selon une au moins des revendications 3 à 6,
**caractérisé en ce**
**que** des évidements (30) sont prévus dans la surface du tambour (12).

8. Dispositif selon une au moins des revendications précédentes 3 à 7,
**caractérisé en ce**
**que** les maillons (16) ne sont mobiles en translation que sur un côté.

9. Dispositif selon une au moins des revendications précédentes 3 à 8,
**caractérisé en ce**
**que** des maillons (16', 16") voisins sont reliés mobiles par l'intermédiaire d'un boulon (32), le boulon (32) étant retenu dans un ergot (38) disposé au centre à la hauteur d'un premier maillon (16") tandis que le boulon (32) est retenu dans le deuxième maillon (16') dans une branche droite (34) et dans une branche gauche (36), la branche gauche (36) étant beaucoup plus large que la branche droite (34).

10. Dispositif selon une au moins des revendications précédentes 3 à 9,
**caractérisé en ce**
**que** chaque maillon (16) comporte un entraîneur (50) faisant saillie vers l'extérieur.

11. Dispositif selon une au moins des revendications précédentes 3 à 10,
**caractérisé par**
un guidage forcé (26, 44) qui fait se décaler des maillons (16) voisins en travers du sens de mouvement (28).

12. Dispositif selon la revendication 11,
**caractérisé en ce**
**que** les maillons (16) s'engagent avec leur entraîneur (50) dans le guidage forcé (26, 44) et sont décalés en travers du sens de mouvement (28) de la chaîne rigide en poussée (10) par l'intermédiaire de cet entraîneur (50).
